# EUROPEAN PATENT SPECIFICATION

(11) **EP 1 623 063 B1**
(45) Date of publication and mention of the grant of the patent: **24.11.2010**
(21) Application number: 04706685.7
(22) Date of filing: 30.01.2004
(51) Int. Cl.: D06C 3/00

(54) **COATING COMPOSITIONS AND TEXTILE FABRICS COATED THEREWITH**
BESCHICHTUNGSZUSAMMENSETZUNGEN UND DAMIT BESCHICHTETE TEXTILE FLÄCHENGEBILDE
COMPOSITIONS DE REVETEMENT ET TISSUS TEXTILES REVETUS AVEC CELLES-CI

(30) Priority: 04.02.2003 GB 0302491; 08.07.2003 GB 0315926
(43) Date of publication of application: 08.02.2006
(73) Proprietor: Dow Corning Corporation, Midland, Michigan 48611 (US)
(72) Inventor: BUDDEN, Graham D., CowBridge, Clamorgan CF71 7RL (GB); JAMES, Stephen, Barry, Glamorgan CF62 6JW (GB)
(74) Representative: Donlan, Andrew Michael
(86) International application number: PCT/EP2004/001755
(87) International publication number: WO 2004/070102

(56) References cited:
- US-A- 4 618 522
- US-B1- 6 354 620

## Description

The present invention relates to a composition suitable for coating on to textile fabrics and to textile fabrics coated with such compositions. The invention also relates to a process for preparing such textile fabrics and to airbags and like products made with said coated textile fabrics.

Particularly useful applications for textile fabrics coated according to the present invention are those applications where the textile fabric is formed into an envelope and pressure is applied inside the envelope, e.g. by introducing gas into the envelope and thus inflating it. Such applications include inflatable restraint devices such as automotive airbags, emergency shoots on aeroplanes and hot air balloons. Coating compositions which provide a flexible coating on a textile fabric to, for example, decrease permeability of the textile fabric or to improve thermal protection of the textile fabric are described in many patent specifications, such as those referred to below.

The most widely used coatings are based on curable organopolysiloxane compositions, for example a composition comprising a polyorganosiloxane having at least two silicon-bonded alkenyl groups per molecule, an organohydrogensiloxane having at least three silicon-bonded hydrogen atoms per molecule and a platinum group based catalyst for a hydrosilylation reaction. Such curable organopolysiloxane compositions generally contain an inhibitor of said hydrosilylation reaction, an adhesion promoting additive and a reinforcing silica and/or silicone resin filler.

An example of such a composition may be seen in EP 0718432 in which the reinforcing agent is a silicone resin and the adhesion promoting additive comprises an organosilicon compound having epoxy and alkoxy functionalities, an organotitanium compound, an alkenyl functional silanol terminated polyorganosiloxane and a metal chelate compound.

In US 5658674 the filler is claimed as optional and may be either reinforcing such as a hydrophobically treated silica or non-reinforcing e.g. calcium carbonate, but US 5658674 teaches that as a practical matter the filler employed is a mixture of quartz and silica which are reinforcing fillers. US 5658674 further claims an adhesion promoter comprising an alkoxylated organosilane, an organosilicon compound having at least one epoxy radical, and a metal chelate and/or metal alkoxide, the metal being selected from zirconium, germanium, lithium, manganese, iron or magnesium.

US 5877256 describes a liquid silicone rubber coating composition for application to airbags in automobiles, comprising a polydiorganosiloxane having alkenyl groups, a polyorganosiloxane resin, an inorganic filler, a certain polyorganohydrosiloxane, a platinum group metal catalyst and an epoxy group-containing organosilicon compound. US 5401566 describes a textile fabric for airbags impregnated with a silicone composition comprising a linear polyorganosiloxane having aliphatic unsaturation, a certain polyorganohydrosiloxane, an addition reaction catalyst, a hydrophobic silica, a flame retardant and optionally an adhesion promoting agent.

WO 01/12894 describes an elastomer-forming coating composition for textile fabrics which does not require an adhesion promoter or an inorganic reinforcing filler, comprising a first, second and third organopolysiloxane having aliphatically unsaturated hydrocarbon or hydrocarbonoxy substituents, an organosilicon crosslinker having at least 3 silicon-bonded hydrogen atoms, a catalyst able to promote the reaction of the aliphatically unsaturated hydrocarbon or hydrocarbonoxy substituents with Si-H groups and a reinforcing agent in the form of a silicone resin.

US 4618522 describes an organopolysiloxane fabric coating composition comprising a liquid chain-stopped polysiloxane, a resinous organopolysiloxane containing silicon bonded vinyl groups, a platinum catalyst, a liquid organohydrogenpolysiloxane crosslinker and an effective amount of a non-abrasive filler examples of which include ground quartz, calcium carbonate, hydrated alumina, fumed silica, aluminium silicate and potassium titanate. These compositions were intended to impart tear strength and flame retardance particularly as a roofing fabric.

US 6354620 describes a curable coating composition comprising an organopolysiloxane polymer having at least two silicon-bonded olefinically unsaturated hydrocarbon substituents, alkoxy groups or hydroxyl groups and having a degree of polymerisation of no more than 150, a cross-linking organosilicon material having at least 3 silicon-bonded reactive groups and a catalyst. The coating composition optionally contains non-reinforcing filler but contains no more than 3% by weight of reinforcing filler. The coating is designed for use on an air bag textile fabric that already has an elastomeric coating on it. The composition of US 6354620 is applied as an overcoating at a coat weight of up to 25 g/m², and reduces friction.

It will be seen from the above that the teaching of the prior art requires the main elastomeric coating on an air bag to contain a reinforcing agent in the form of a silicone resin or hydrophobic treated silica filler. The inventors have surprisingly found according to the present invention that they can avoid the need for expensive silicone resin and hydrophobically treated silicas of the prior art and can obtain adequate tear strength, flexibility and abrasion resistance using fillers normally considered to be substantially non-reinforcing.

In accordance with the present invention there is provided an inflatable restraint device comprising a textile fabric coated with a layer of from more than 25 up to 180 g/m² of an organopolysiloxane composition comprising which is curable to an elastomer comprising:-
(A) at least one organopolysiloxane having silicon-bonded aliphatically unsaturated hydrocarbon groups, the organopolysiloxane present in greatest amount having only terminal silicon-bonded aliphatically unsaturated hydrocarbon groups per molecule and a viscosity at 25°C of at least 10 Pa.s;
(B) an organosilicon crosslinker having at least 3 silicon-bonded hydrogen atoms in an amount which is sufficient to give a molar ratio of Si-H groups in (B) to the total amount of alkenyl groups in (A) of from 1/1 to 10/1;
(C) a precious metal catalyst in an amount sufficient to promote the reaction of the aliphatically unsaturated hydrocarbon substituents of (A) with the Si-H groups of (B);
(D) 15 to 30 parts by weight of a filler per 100 parts of the weight of the total composition, **characterised in that** the filler has a Moh hardness no greater than 4.5 and a mean particle size no greater than 3.0µm.

The component (A) generally contains either two or more aliphatically unsaturated hydrocarbon or hydrocarbonoxy reactive groups or two or more hydroxyl or hydrolysable reactive groups, and the organosilicon crosslinker (B) is selected accordingly. Preferably the viscosity of the component A used in the present invention is no greater than 100 Pa.s at 25°C.

Organopolysiloxanes (A) having at least two silicon-bonded alkenyl groups per molecule are well known and may vary from viscous materials to freely flowing liquids. They may be homopolymers, copolymers or mixtures thereof which comprise units of the general formula RₐR'_{b}SiO_{[4-(*a*+*b*)]/2} wherein R is a monovalent hydrocarbon group, R' is a monovalent aliphatically unsaturated hydrocarbon group, *a* is 0, 1, 2 or 3 and *b* is 0 or 1 provided that *a*+*b* is not greater than 3.

For example, in one preferred embodiment of the present invention the organopolysiloxane (A) may comprise first, second and third organopolysiloxanes having aliphatically unsaturated hydrocarbon or hydrocarbonoxy substituents, wherein the first and second organopolysiloxanes have aliphatically unsaturated hydrocarbon or hydrocarbonoxy substituents only at the terminal siloxane units. The first organopolysiloxane (A)(i) has a viscosity at 25°C of from 0.05 to 0.65 Pa.s and the second organopolysiloxane (A)(ii) has a viscosity at 25°C of at least 10 Pa.s. The third organopolysiloxane (A)(iii) has aliphatically unsaturated hydrocarbon or hydrocarbonoxy substituents at terminal siloxane units and on siloxane units in the siloxane polymer chain.

In this preferred embodiment the first and second organosiloxane polymers are preferably of a generally linear nature having the general structure (II) 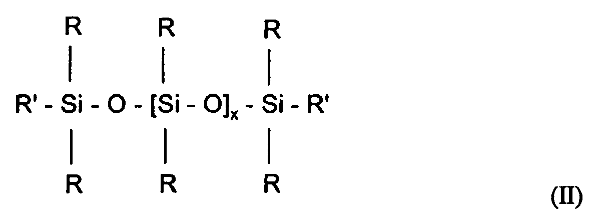 wherein R and R' have the same meaning as above, and wherein x is an integer of a size sufficient to allow the organopolysiloxane to fulfil the requirements for the viscosity range, mentioned above, for example a value of up to 300, preferably from 75 to 250, more preferably 100 to 200 for the first organopolysiloxane and having a value of at least 300, preferably from 400 to 1000, more preferably 450 to 1000 for the second organopolysiloxane. It is particularly preferred that R denotes an alkyl or aryl group having from 1 to 8 carbon atoms, e.g. methyl, ethyl, propyl, isobutyl, hexyl, phenyl or octyl. More preferably at least 50% of all R groups are methyl groups, most preferably substantially all R groups are methyl groups. R' is an aliphatically unsaturated hydrocarbon or hydrocarbonoxy group, preferably a hydrocarbon group having from 2 to 22 carbon atoms, more preferably 2 to 8 carbon atoms, most preferably 2 or 6 carbon atoms. It is particularly preferred that the aliphatically unsaturated group is an alkenyl group, although alkynyl groups may also be used. Particularly useful are vinyl, allyl and hexenyl groups, most preferably having terminal unsaturation. It is most preferred that first organopolysiloxane is an α,ω-vinyldimethylsiloxy polydimethylsiloxane polymer having a viscosity of from 0.05 to 0.65 Pa.s at 25°C, more preferably 0.1 to 0.6 Pa.s, most preferably 0.2 to 0.6 Pa.s. It is also most preferred that second organopolysiloxane is an α,ω-vinyldimethylsiloxy polydimethylsiloxane polymer having a viscosity of from 10 to 90 Pa.s at 25°C, more preferably 20 to 80 Pa.s, most preferably 40 to 70 Pa.s

Preferably the third organosiloxane polymer is also of a generally linear nature having the general structure (III) 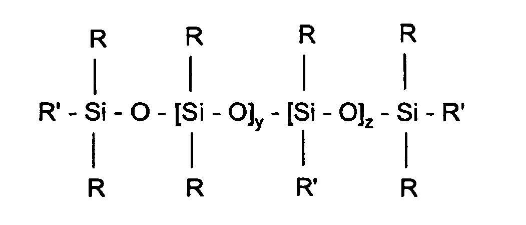 wherein R and R' have the same meaning as above, and wherein *y* is zero or an integer and z has a value of at least 1. The value of *y*+*z* is preferably no more than 300, preferably from 100 to 200, more preferably from 120 to 180. The value ofz is preferably at least 2, more preferably from 2 to 20, most preferably 2 to 5. It is most preferred that third organopolysiloxane is an α,ω-vinyldimethylsiloxy polydimethylsiloxane polymethylvinylsiloxy co-polymer having a viscosity of from 0.05 to 0.65 Pa.s at 25°C, more preferably 0.1 to 0.6 Pa.s, most preferably 0.2 to 0.6 Pa.s.

The relative amounts of said first second and third organopolysiloxanes are not crucial, although it is preferred that the organopolysiloxane (A)(ii) is present in the greatest amount. A factor which will influence the exact ratios is the viscosity of each of the organopolysiloxanes and the desired viscosity of the composition needed for coating the textile fabrics. It is preferred that this viscosity is sufficiently low to allow the use of standard coating equipment at normal temperatures. Suitable weight ratios of the first to second organopolysiloxanes are from 1 to 2 to 1 to 20, whilst suitable weight ratios of the second to third organopolysiloxanes are from 20 to 1 to 2 to 1. Particularly suitable weight ratio of first, second and third organopolysiloxanes are 1/2/1, 1/5/1, 2/10/1, 1/10/2, 5/10/1 and 2/5/1. It is preferred that the organopolysiloxanes (A) comprise from 40 to 95% by weight of the composition in accordance with a first aspect of the invention, preferably from 50 to 85%, more preferably 60 to 80%.

In a preferred embodiment the organopolysiloxane component (A) comprises
A (i) 100 parts by weight of a first organopolysiloxane material having only terminal silicon-bonded aliphatically unsaturated hydrocarbon groups per molecule and a viscosity at 25°C of from 0.05 to 0.65 Pa.s;
A (ii) from 300 to 700 parts by weight of a second organopolysiloxane material having only terminal silicon-bonded aliphatically unsaturated hydrocarbon groups per molecule and a viscosity at 25°C of at least 10 Pa.s; and
A (iii) from 50 to 150 parts by weight of a third organopolysiloxane material having has aliphatically unsaturated hydrocarbon substituents at terminal siloxane units and on units in the polymer chain per molecule;

The polyorganosiloxane (A) can alternatively be a polydiorganosiloxane having not less than two groups bonded to silicon which are hydroxyl or hydrolysable groups. Such a polymer is preferably a polydiorganosiloxane chain comprising siloxane units of the general formula R"ₛSiO_{4-s/2} in which R" represents an alkyl group having from 1 to 6 carbon atoms, a vinyl group or a phenyl group, or fluorinated alkyl group and s has a value of 0, 1 or 2. Preferred materials are linear materials i.e. s = 2 for all units. Preferred materials have polydiorganosiloxane chains according to the general formula -(R"₂SiO)ₘ- in which each R" represents an alkyl group, for example a methyl, ethyl or isobutyl group and m has a value from about 200 to about 1500. Each hydroxyl or hydrolysable groups may be the same or different and may be selected, for example, from -Si(R")₂OH, or

-Si(R")₂-(D)_{d}-R"'SiR"ₖ(OR⁵)₃₋ₖ

where D is -R"'-(Si(R")₂-O)ᵣ-Si(R")₂- and
R" is as aforesaid, (and is preferably methyl), R"' is a divalent hydrocarbon group r is a whole number between 1 and 6 and d is 0 or a whole number, R⁵ is an alkyl or oxyalkyl group in which the alkyl groups have up to 6 carbon atoms and k has the value 0, 1 or 2. Preferably, R"' is either a methylene or ethylene group k is 0 or 1 and R⁵ is a methyl or ethyl group. Most preferably R"' is an ethylene group k is 0 and R⁵ is an ethyl group.

The crosslinker (B) for cross-linking a polyorganosiloxane (A) having silicon-bonded aliphatically unsaturated hydrocarbon or hydrocarbonoxy groups generally has at least 3 silicon-bonded hydrogen atoms and is preferably selected from silanes and short chain organosiloxane polymers. The crosslinker (B) is capable of reacting with the silicon-bonded groups R' of the organopolysiloxane described above by addition (hydrosilylation) reaction, for example according to the general reaction scheme (IV), wherein R" is a divalent hydrocarbon group and y is as defined above, preferably here with a value of 1.

≡Si-R"_{y}CH=CH₂ + H-Si≡ → ≡Si-R"_{y}CH₂-CH₂-Si≡ (IV)

A suitable silane which may serve as cross-linking organosilicon compound is methyltrihydrosilane.

Suitable short chain organosiloxane polymers (B) include those having at least 3 silicon-bonded hydrogen atoms per molecule and may be linear, branched or cyclic. Preferred organosilicon cross-linkers have the general formula

R³R⁴₂SiO(R⁴₂SiO)*ₚ*(R³HS₁₀)*_{q}*SiR⁴₂R³

or 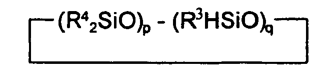 wherein R⁴ denotes an alkyl or aryl group having up to 10 carbon atoms, R³ is a group R⁴ or a hydrogen atom, *p* has a value of from 0 to 2*q*, *q* has a value of from 2 to 5000, and there are at least 3 silicon-bonded hydrogen atoms present per molecule. It is not crucial but preferred that the silicon-bonded hydrogen atoms are on terminal silicon atoms for linear siloxane compounds. It is preferred that R⁴ denotes a lower alkyl group having no more than 3 carbon atoms, most preferably a methyl group. R³ preferably denotes an R⁴ group.
Preferably *q* has a value of from 3 to 70, more preferably 3 to 30, or where cyclic organosilicon materials are used, from 3 to 8 and preferably *p* has a value of from 0 to 1.25*q*. It is most preferred that the organosilicon crosslinker is a siloxane polymer having a viscosity of from 0.001 to 1.0 Pa.s at 25°C, more preferably 0.002 to 0.15 Pa.s, most preferably 0.005 to 0.06 Pa.s. The cross-linking organosilicon compound may comprise a mixture of several materials as described.

Examples of suitable organosilicon cross-linkers (B) are trimethylsiloxane end-blocked polymethylhydrosiloxane having up to for example 20 carbon atoms, dimethylhydrosiloxane end-blocked polymethylhydrosiloxane, a dimethylsiloxane methylhydrosiloxane copolymer and tetramethylcyclotetrasiloxane. The size of the organosilicon crosslinker is not crucial, but preferred are short chain organosiloxane polymers having at least three silicon-bonded hydrogen atoms, which have a chain length of from 2 to 50 silicon atoms, more preferably from 5 to 20. The amount of crosslinker used is preferred to allow a ratio of number of silicon-bonded hydrogen atoms to aliphatically unsaturated hydrocarbon and hydrocarbonoxy groups in the composition, which is at least 1/1, preferably from 1/1 to 10/1, most preferably 3/1 to 7/1.

The crosslinker (B) used for an organopolysiloxane (A) having two or more reactive hydroxyl or hydrolysable groups may be a crosslinker having at least 3 silicon-bonded hydrogen atoms as described above or an alkoxysilane of the general formula R"_{4-f}Si(OR⁵)_{f} wherein R" and R⁵ are as aforesaid and f has a value of 2, 3 or 4. Preferred silanes are those wherein R" represents methyl, ethyl or vinyl or isobutyl, R⁵ represents methyl or ethyl and f is 3. Examples of operative silanes are methyltri(methoxy)silane (MTM), vinyltrimethoxysilane, methyltriethoxysilane, and vinyltriethoxysilane, isobutyltrimethoxysilane (iBTM). Other suitable silanes include ethyltrimethoxysilane, vinyltriethoxysilane, phenyltrimethoxysilane, and other such trifunctional alkoxysilanes as well as partial hydrolytic condensation products thereof. A sufficient amount of the chosen alkoxysilane(s) is/are employed to ensure adequate stability of the composition during storage and adequate cross linking of the composition when exposed to atmospheric moisture.

The catalyst (C) for an organopolysiloxane (A) having two or more reactive aliphatically unsaturated hydrocarbon or hydrocarbonoxy groups is preferably based on a precious metal, for example platinum, ruthenium, rhodium, palladium, osmium or iridium. Most preferably the catalyst is a platinum compound or complex such as chloroplatinic acid, either as the commonly available hexa-hydrate form or in its anhydrous form, as taught in US patent 2,823,218, platinum acetylacetonate, a complex of a platinous halide with an unsaturated compound such as ethylene, propylene, an organovinylsiloxane or styrene, hexamethyldiplatinum, PtCl₂, PtCl₃, PtCl₄, or Pt(CN)₃. A particularly useful catalyst is the composition that is obtained when chloroplatinic acid is reacted with an aliphatically unsaturated organosilicon compound such as divinyltetramethyl-disiloxane, as disclosed in US patent 3,419,593. It is preferred that the catalyst is employed in an amount giving from 2 to 100 ppm by weight of precious metal, e.g. platinum, based on the total weight of the total composition, more preferably 5 to 50ppm.

The catalyst (C) for an organopolysiloxane (A) having two or more reactive hydroxyl or hydrolysable groups can be an organotitanium or organozirconium compound having organic groups attached to the metal through a metal-oxygen-carbon linkage. The two main types of compound falling within this definition are the ortho-esters, that is the alcoholates, and the acylates in which the organic group is derived from a carboxylic acid. For example an organotitanium compound in accordance with this invention may contain both alcoholate and acylate groups attached to the same titanium atom. Operative organotitanium catalysts include those of the formula Ti(OR⁶)₄ wherein each R⁶ may be the same or different and is a linear or branched alkyl, alkoxyalkyl or acyl group, for example tetra-isopropyltitanate, tetra-methoxyethoxy-titanate and di-isopropyldi-acetoxytitanate, or chelated or partially chelated titanium compounds produced, for example, by reacting an alcoholate as referred to above with an α- or β-diketone or a derivative thereof. More preferred are those partially chelated titanium compounds having two alcoholate groups attached to titanium. The most preferred organotitanium compounds are those wherein the two alcoholate groups are composed of more than 3 carbon atoms, for example, bis (diethyleneglycoxy)-titanium-(2,4-pentanedionate) or bis(2-ethylhexyloxy) titanium bis (2,4-pentanedionate). Other metal chelates may be suitable as the catalyst (C) for an organopolysiloxane (A) having two or more reactive hydroxyl or hydrolysable groups, for example acetyl-acetonates such as triacetyl acetonates of aluminium, tetra-acetyl acetonates of zirconium and triacetylacetonates of iron, or aluminium chelated with a hydroxycarboxylic acids e.g., tartaric acid.

The filler (D) of the present invention has a Moh's scale hardness of less than 4.5. Examples of such fillers include, but are not restricted to, talc (Moh 1), aluminite (Moh 1 to 2), calcium sulphate (anhydrite) (Moh hardness 3.5), gypsum (Moh hardness 2), calcium sulphate (Moh 1.6 to 2), magnesium carbonate (Moh hardness 3.5 to 4.5), clays such as kaolin (Moh 1 to 2), aluminium trihydroxide (Moh 2.5 to 3.5), magnesium hydroxide (brucite) (Moh 2.5), graphite (Moh 1 to 2), diatomaceous earth Moh 1.0 to 1.5), calcium carbonate (Moh hardness 3 to 3.5), barite, a form of barium sulphate (Moh 3 to 3.5), copper carbonate, e.g. malachite (Moh hardness 3.5 to 4), nickel carbonate, e.g. zarachite, barium carbonate, e.g. witherite (Moh hardness 3.5) and/or strontium carbonate e.g. strontianite (Moh hardness 3.5). The filler (D) may be surface treated, for example with a fatty acid or a fatty acid ester such as a stearate, or with a silane.

By comparison, quartz and silica have a Moh scale number of about 7, and aluminium oxide Moh 9.0. Moh's scale has a range of from 1 to 10 and relates to the comparative scratch hardness of compounds (if a specimen can be scratch by a mineral from the standard list it is softer than that mineral and has a lower Moh hardness; if it will scratch the mineral it is harder than the mineral and has a higher Moh hardness). The inventors have found that the use of harder fillers compromises fabric tear strength, a test generally utilised to test the suitability of cured liquid silicone rubber based coatings as airbag coatings. Preferably no more than 10% of the filler in the coating composition of the present invention is a reinforcing filler having a Moh hardness greater than 5, and no more than 10% by weight of the composition comprises silica based filler and/or silicone resin. Most preferably the composition contains substantially no silica or silicone resin.

It is also a requirement of the present invention that the fillers have a mean particle size no greater than 3.0µm, preferably no greater than 2.0 µm, for example 0.03 to 1.5µm. The filler (D) is present at 17 to 30 weight % and more preferably 15 to 25 weight % of the fabric coating composition.

The coating composition preferably contains an adhesion promoting additive (E). Such an additive preferably comprises an organosilicon compound containing one or more alkoxy and alkenyl groups and/or an epoxy group containing organosilicon compound, and a compound or chelate of a metal is selected from titanium, zirconium, germanium, lithium, manganese, iron, aluminium or magnesium. A preferred adhesion promoting additive comprises the following composition:-
(E)(i) an organosilicon compound having epoxy and alkoxy functionalities,
(E)(ii) an organotitanium or organozirconium compound and
(E)(III) an alkenyl functional silanol terminated polyorganosiloxane.

Component E (i) is an organosilicon compound having epoxy and alkoxy functionalities, for example as described in US patent 3,455,877. The alkoxy radicals of the component E (i) may be the same or different and are usually selected from alkoxy radicals having from 1 to 4 carbon atoms, for example, methoxy or ethoxy. Any other substituents, when present, are preferably selected from alkyl groups having from 1 to 8 carbon atoms. Suitable organosilicon compounds (E)(i) are preferably low molecular weight materials, e.g. linear of branched organosiloxane polymers having no more than 10 silicon atoms per molecule. More preferred are silanes having only epoxy and alkoxy groups. Suitable silanes (E)(i) include, by way of example, 3-glycidoxypropyl- trimethoxysilane, and 9-(3,4 epoxycyclohexyl)- ethyltrimethoxysilane. Component (E)(i) is preferably used at concentrations of from 0.1 to 2 % by weight of the total weight of a composition in accordance with the invention, more preferably 0.3 to 1 %. Higher amounts may be preferred where the composition is to be applied to certain textile substrates, e.g. polyester.

Component E (ii) is preferably an organotitanium compound. This compound serves to catalyse reaction of the components of adhesion promoting additive (E). Component (ii) may be any organotitanium or organozirconium compound having organic groups attached to the metal through a metal-oxygen-carbon linkage. The two main types of compound falling within this definition are the ortho-esters, that is the alcoholates, and the acylates in which the organic group is derived from a carboxylic acid. An organotitanium compound in accordance with this invention may contain both alcoholate and acylate groups attached to the same titanium atom. Operative organotitanium compounds thus include those of the formula Ti(OR⁶)₄ wherein each R⁶ may be the same or different and is a linear or branched alkyl, alkoxyalkyl or acyl group, for example tetra-isopropyltitanate, tetra-methoxyethoxy-titanate and di-isopropyldi-acetoxytitanate. The preferred organotitanium compounds for use in this invention are the chelated or partially chelated titanium compounds. These materials are produced, for example, by reacting an alcoholate as referred to above with an α- or β-diketone or a derivative thereof. More preferred are those partially chelated titanium compounds having two alcoholate groups attached to titanium. The most preferred organotitanium compounds are those wherein the two alcoholate groups are composed of more than 3 carbon atoms, for example, bis (diethyleneglycoxy)-titanium-(2,4-pentanedionate) or bis(2-ethylhexyloxy) titanium bis (2,4-pentanedionate).

Optionally the adhesion promoting additive may additionally comprise a second metal chelate compound of adhesion promoting additive (hereafter referred to as (E)(iv) where it is required to enhance the adhesion promoting characteristics of additive (E). Any metal chelate which is compatible with the composition and which does not interfere with the hydrosilylation reaction of components (A) and (B) is suitable. Suitable metal chelates include acetyl-acetonates e.g. triacetyl acetonates of aluminium, tetra-acetyl acetonates of zirconium and triacetylacetonates of iron. Aluminium chelates are preferred for example, aluminium may be chelated with 1,3-diketones, e.g., acetylacetonate or hydroxycarboxylic acids, e.g., tartaric acid; the preferred aluminium chelate is, however, aluminium acetylacetonate. Aluminium chelates enhance and increase the rate of adhesion of a composition in accordance with the invention to a suitable substrate. The metal chelate may be present in a composition in accordance with the invention in proportions of from 1 to 50 parts by weight, preferably 1 to 3 parts by weight per 100 parts of component E(i) or 0.004 to 0.2% by weight of the composition. Higher levels of metal chelate impair flame resistance of curable compositions in accordance with the invention.

Hence component (E)ii when used in combination with (E)iv may for example comprise a mixture and/or reaction product of a chelated titanate or zirconate compound selected from M[ORⁱⁱⁱ]₄ and M[OR^{iv}]*ₕ*[Z]*_{g}* wherein M is titanium or zirconium, each Rⁱⁱⁱ and R^{iv} is the same or different and is selected from a primary, secondary or tertiary aliphatic hydrocarbon and SiR⁹₃, where each R⁹ is an alkyl group having 1 to 6 carbon atoms and Z is a group of the formula -O-Y-O- wherein Y is an alkylene group comprising 1 to 8 carbon atoms or a branched alkylene radical comprising 1 to 8 carbon atoms and x is 0 or 2 in which case when h is 0, g is 2 and when h is 2, g is 1; in combination with a chelate as described above or a chelate of the general formula:- 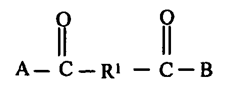 wherein R¹ is selected from a methylene group or a substituted methylene group having 1 to 6 carbon atoms,
A is selected from -(CX₂)_{w}C(R⁷)₃ wherein w is from 0 to 5, and an adamantyl group or a derivative thereof;
B is selected from the group of
   -(CX2)ₜC(R⁷)₃ wherein t is from 0 to 5;
a monovalent alkyl group having from 1 to 6 carbon atoms and; OR⁸, wherein R⁸ is selected from the group of -(CX₂)ₜC(R⁷)₃ and a monovalent alkyl group having from 1 to 6 carbon atoms; wherein each X is the same or different and is selected from the group of a halogen radical and hydrogen, each R⁷ is the same or different and is selected from the group of a halogen radical, hydrogen and an alkyl radical having one to eight carbon atoms.

The presence of an organotitanium compound in the adhesion promoting additive as (E)ii promotes the rapid onset of adhesion of the curable composition in accordance with the invention to suitable substrates; in addition, the ability to promote rapid onset of adhesion does not deteriorate over time. The most preferred organotitanium compounds do not produce toxic vapour by products or unpleasant odours which accompany use of certain organotitanium compounds. Component (E)ii may be employed in said adhesion promoting additive (E) in a proportion of from 10 to 100 parts by weight and preferably 40 to 80 parts by weight per 100 parts by weight of component E(i). Preferably said component E(ii) is present in an amount equivalent to between 50ppm and 1000ppm of titanium metal, more preferably 100 to 700ppm and most preferably 200 to 500ppm of titanium metal.

Component (E)(iii) of the preferred adhesion promoting additive may comprise either a vinyl functional silane or an alkenyl functional silanol terminated polyorganosiloxane. The alkenyl functional silanol terminated polyorganosiloxane comprises units according to the general formula R^{v}*_{c}*R^{vi}SiO_{(3-*c*)/2} and RveSiO_{(4-e)/2} wherein R^{v} denotes an alkyl group having from 1 to 8 carbon atoms or an aryl group having from 6 to 8 carbon atoms, R^{vi} is as aforementioned, *c* is 1 or 2 and *e* is 1, 2 or 3. Preferably, component (E)iii is according to the formula H-(OSiR²₂)*ₙ*(OSiR²R')*ᵥ*-OH wherein R^{v} and R^{vi} are as defined above, R^{vi} preferably having from 2 to 8 carbon atoms, *n* is from 1 to 6, more preferably 2 to 5 and *v* is from 1 to 6, more preferably 1 to 3. The most preferred material has from 10% to 15% by weight of silicon-bonded alkenyl groups, e.g., vinyl groups, per molecule. Component (E)iii may be employed in the preferred adhesion promoting additive in proportions of from 20 to 100 parts by weight, preferably 40 to 100 parts by weight per 100 parts of component (E)i.

The adhesion promoting additive (E) may be present in a curable composition in accordance with the invention in an amount which is 0.1% to 5.0 % by weight of the total weight of the curable composition in accordance with the invention.

A further optional ingredient may be any suitable compound which may be utilised as sacrificial hydrolysing agent so that any water in the system reacts with it in preference to the titanium catalyst. Any appropriate compound may be used providing it substantially does not negatively effect the other properties of the resulting product. Examples include alkoxy silanes, such as an alkyl trialkoxy silane or a chlorosilane.

Other additional components may be included in the composition in accordance with the invention include chain extenders, dyes, colorants, pigments, viscosity modifiers, bath-life extenders, inhibitors, solvents, fire retardancy agents and flexibilisers. Chain extenders which may be used are generally organosiloxane materials which are predominantly linear in nature and which have a silicon-bonded hydrogen at each end of the polymer, allowing it to react with the R' group of siloxane polymers, this merely extending the length of the siloxane polymer. Inhibitors for hydrosilylation reactions, especially those catalysed by platinum-based catalysts, are well known in the art and may include, for example, acetylenic alcohols, dialkylmaleates, primary alcohols or mixtures thereof. When utilised a hydrosilylation reaction inhibitor is preferably present in a curable composition in a proportion sufficient to ensure that the composition cures in not less than 30 seconds at 150°C. Fire retardant agents may be used when required but when the filler is aluminium trihydroxide this compound provides fire retardant properties to the composition without the need of further agents. Suitable fire retardant agents include for example halogenated compounds, phosphates and antimony (III) oxide.

A curable composition for the inflatable restraint device in accordance with the invention may be formed simply by mixing the components (A),(B), (C), (D) and (E). The curable composition for the inflatable restraint device in accordance with the invention may be provided in one part although it is preferred for storage stability reasons to provide a composition in accordance with the invention in two or more parts, most preferably two parts. A two part composition may then be mixed in the required proportions prior to use. It is important to distribute the components over the two or more parts of the composition in the correct fashion to obtain storage stability. The compositions may accordingly be formulated in a number of ways provided that component (B) the organohydrogensiloxane and component (C) the precious metal catalyst are stored separately. A preferred method of storing a two part composition comprises storing in a first part of the composition an alkenyl polyorganosiloxane (A), (C), a precious metal catalyst, the adhesion promoting components (E)(ii), (iii) and if present (E)(iv) optionally with an extending filler and in a second part the organohydrogensiloxane of component (B) and the organosilicon compound having epoxy and alkoxy functionalities (E)(i) with an hydrosilylation inhibitor where required. The two parts may be formulated for combination in any suitable ratio.

Curable compositions for the inflatable restraint device in accordance with the present invention when mixed may have a viscosity appropriate to application machinery and textiles to be coated, generally in the range 2 Pa.s to 200 Pa.s at 25°C. Preferred materials have a viscosity in the range 20 to 120 Pa.s at 25°C and cure within a period of from 30 seconds to 4 minutes at a temperature of 150°C to 180°C to provide elastomeric materials. Compositions in accordance with the invention typically remain at workable viscosities for at least 24 hours when stored at temperatures up to 40°C.

The composition in accordance with the invention may be applied according to any suitable known techniques to the textile fabric substrates. These include, but are not restricted to, spraying, gravure coating, bar coating, coating by knife-over-roller, coating by knife-over-air, dipping and screen-printing. It is preferred that the composition is applied by a knife-over-air or knife-over-roller coating method. It is also preferred that the composition is applied to a coat-weight prior to curing of at least 10 g/m². The coating thickness is from more than 25 up to 180 g/m², preferably from more than 25 up to 160g/m², for example 35 to 50 g/m². In order to make the compositions easily applicable to the textile fabric, it is preferred that the viscosity of the composition is from 15 to 200 Pa.s. The textile fabric is preferably scoured prior to application, in order to ensure good adhesion of the composition.

Although it is not preferred, it is possible to apply the composition in multiple layers, which together fulfil the preferred criteria set out above. It is also possible to apply onto the composition in accordance with the invention a further coating, e.g. of a material providing low friction, or an additional textile fabric, whether woven or non-woven, to improve the strength and/or the feel of the textile fabric.

Curing conditions for the coating are preferably at elevated temperatures over a period which will vary depending on the actual temperature used, for example 120 to 200°C for a period of up to 5 minutes but are preferably for 30 seconds to 3 minutes at a temperature in the range of 140 to 180°C. It is clear that an increase in curing temperature will allow the shortening of the curing time.

Particularly useful applications for textile fabrics coated to make an inflatable restraint device according to the present invention are those applications where the textile fabric is formed into an envelope and pressure is applied inside the envelope, e.g. by introducing gas into the envelope and thus inflating it. Examples of inflatable restraint devices include automotive airbags; emergency shoots on aeroplanes and hot air balloons.

Any suitable textile fabric, particularly those used in the preparation of automotive airbags, emergency shoots on aeroplanes and hot air balloons and the like may be treated to make an inflatable restraint device using the composition in the present invention. Such textiles may be made from synthetic fibres or blends of natural and synthetic fibres and including polyesters, polyimides, polyethylene, polypropylene, polyester-cotton, glass fibre and polyamide fibres such as nylon, particularly nylon 6,6. They are preferably woven textile fabrics which are required to be flexible in order to be inflatable. Preferably they are sufficiently flexible to be folded into relatively small volumes, but also sufficiently strong to withstand their deployment at high speed e.g. under the influence of an explosive charge, the impact of passengers or to be resistant to other influences when inflated.

The main advantages of this coating for use with airbags and the like is that the coated fabric is more flexible and more easily handled and folded than fabric coated with a composition containing a harder filler such as silica. Despite relying substantially on low Moh hardness fillers the coatings still provide the required physical properties for use in airbag and the like applications as will be appreciate from the following examples. When the low hardness filler is used at 15 to 30% by weight of the coating composition, and particularly when it is used at the preferred level of 17 to 25%, the coatings have improved tear strength compared to a coating based on a silica filler and still have adequate abrasion resistance and comb strip resistance. A further advantage is that the low Moh hardness fillers generally do not interact with the adhesion promoting additive (E); interaction of silica fillers with the adhesion promoting additive can cause an unacceptably high increase in viscosity of the coating composition.

The following Examples serve to illustrate the invention. All parts and percentages are by weight unless otherwise stated, and values of viscosity relate to dynamic viscosity at 25°C. The tests undertaken on each sample were three standard tests used for airbags, the flex abrasion test in accordance with ISO 5981, Tear strength in accordance with DIN 53859 T2 and edgecomb resistance in accordance with ASTM D6479-01.

All samples passed the standard flammability test for airbags and like products FMVSS 302.

### Example 1

A first composition (I) was prepared by mixing varying amounts of a composition comprising:-
56.63 parts by weight of an α,ω-vinyldimethylsiloxane end-blocked polydimethylsiloxane (A2) having a viscosity of about 55 Pa.s,
9.82 parts of an α,ω-vinyldimethylsiloxane end-blocked polydimethylsiloxane (A1) having a viscosity of about 0.45 Pa.s,
9.58 parts of a vinyldimethylsiloxane end-blocked polydimethyl, polymethylvinyl siloxane copolymer (A3) having a viscosity of about 0.35 Pa.s,
0.3 parts by weight of a platinum based catalyst,
0.2 parts by weight of tetraisopropoxy titanate and
0.4 parts by weight of a hydroxy terminated dimethyl, methyl vinylsiloxane;
with varying amounts of a filler(D) consisting of a precipitated calcium carbonate, having a mean particle size of 0.07 µm and a BET surface area of 22 m²/g, treated with 2.7 weight % stearic acid (Socal 312N, supplied by Solvay SA).

A second composition (II) was prepared, containing
25 parts by weight of the above α,ω-vinyldimethylsiloxane end-blocked polydimethylsiloxane (A2),
14 parts by weight of the above dimethylvinyl siloxy terminated dimethyl,methylvinyl siloxane (A3)
51 parts by weight of an methylhydrosiloxane dimethylsiloxane copolymer having trimethylsiloxane end-blocking units, at least 3 silicon-bonded hydrogen atoms per molecule and a viscosity of about 0.004 Pa.s.
0.42 parts by weight of ethynyl cyclohexanol; and
8.6 parts by weight of glycidoxypropyltrimethoxysilane.

Compositions I and II were then combined in a ratio of 10:1. The % by weight of filler in the total composition is shown in Table 1 below. The resulting composition was coated at a coat weight of between 35 and 40g/m² onto a textile fabric of nylon-6,6 235dtex / 72 filament yarn of woven construction 285/285 Fd/dm. The resulting coated fabric was cured for 1 minute at a temperature of 160°C. The results of the physical testing undertaken are provided in Table 1:-

**Table 1**

| **% Filler** | **Flex Abrasion (cycles)** | **Tear Strength (N)** | **Edgecomb Resistance (N/5cm)** |
|---|---|---|---|
| 0 (comparison) | 50 | 126 | 453 |
| 15 | 50 | 109 | 537 |
| 17 | 400 | Not measured | Not measured |
| 19 | 600 | Not measured | Not measured |
| 21 | 700 | 150 | 551 |
| 23 | 500 | Not measured | Not measured |
| 25 | 300 | 122 | 624 |
| 30 | 50 | 117 | 635 |
| 35 | 50 | 111 | 674 |

### Comparative Example 1(a)

By way of comparison, when a similar formulation containing 21% treated silica filler in place of the calcium carbonate filler was coated on the same fabric, the tear strength was 125 N and the Edgecomb resistance was 665 N/5cm.

### Example 1(b)

The composition of Example 1 containing 21 % calcium carbonate filler was coated on a fabric of nylon-6,6 350dtex / 144 filament yarn of woven construction 235/235 Fd/dm and cured as described in Example 1. The tear strength was 241 N and the Edgecomb resistance was 470 N/5cm.

### Comparative Example 1(b)

Compositions were prepared, coated onto fabric and tested as described in Example 4 with the variation that the filler (D) was replaced by a ground calcium carbonate having a mean particle size of 5.7 µm, (BLP3 from Omya UK Ltd). The results of the physical testing undertaken are provided in Table 1(b) below:-

**Table 1(b)**

| **% Filler** | **Flex Abrasion (cycles)** |
|---|---|
| 17 | 125 |
| 19 | 125 |
| 21 | 125 |
| 23 | 125 |
| 25 | 125 |

It will be seen from Tables 1 and 1(b) that results of the flex abrasion tests in Comparative Example 1(b) are much lower than those of Examples 1 to 5.

### Example 2

Compositions were prepared, coated onto the fabric described in Example 1(b) and tested as described in Example 1 with the variation that the calcium carbonate filler (D) was replaced by a precipitated aluminium trihydroxide of Moh hardness about 3, mean particle size of 1.1 µm and BET surface area of 5.3 m²/g (Hydral 710 from Alcoa World Chemicals). The results of the physical testing undertaken are provided in Table 2 below:-Table 2

| **% Filler** | **Flex Abrasion (cycles)** | **Tear Strength (N)** | **Edgecomb Resistance (N/5cm)** |
|---|---|---|---|
| 17 | 2000 | 254 | 442 |
| 19 | 2000 | Not measured | Not measured |
| 21 | 2000 | 250 | 452 |
| 23 | 2000 | Not measured | Not measured |
| 25 | 2000 | 235 | 430 |

### Example 3

Compositions were prepared, coated onto the fabric described in Example 1 (b) and tested as described in Example 1 with the variation that the calcium carbonate filler (D) was replaced by an alternative precipitated calcium carbonate having a mean particle size of 0.07 µm and a BET surface area of 22 m²/g which had been treated with 3.0 weight % stearic acid (Calofort SM, supplied by Speciality Minerals). The results of the physical testing undertaken are provided in Table 3 below:-

**Table 3**

| **% Filler** | **Flex Abrasion (cycles)** | **Tear Strength (N)** | **Edgecomb Resistance (N/5cm)** |
|---|---|---|---|
| 17 | 600 | 224 | 447 |
| 19 | 600 | 209 | 482 |
| 21 | 700 | 218 | 489 |
| 23 | 500 | 197 | 512 |
| 25 | 200 | 179 | 497 |

### Example 4

Compositions were prepared as described in Example 1 with the variation that the calcium carbonate filler (D) was replaced by a commercially available untreated kaolin having a mean particle size of 2.0 µm and Moh hardness 1 to 2 (Polestar 200LD Imerys Minerals Ltd). The compositions were coated at a coat weight of between 35 and 40g/m² onto a textile fabric of nylon-6,6 470dtex / 72 filament yarn of woven construction 207/182 Fd/dm. The resulting coated fabric was cured for 1 minute at a temperature of 160°C. The coated fabrics were tested for flex abrasion and the results are provided in Table 4 below:-

**Table 4**

| **% Filler** | **Flex Abrasion (cycles)** |
|---|---|
| 15 | 300 |
| 20 | 300 |
| 25 | 500 |
| 30 | 300 |

### Example 5

Compositions were prepared, coated onto fabric and tested as described in Example 4 with the variation that the kaolin filler (D) was replaced by a further commercially available untreated kaolin having a mean particle size of 0.7 µm and Moh hardness of 1 to 2, (Specwite, supplied by Imerys Minerals Ltd). The results of the flex abrasion tests undertaken are provided in Table 5 below:-

**Table 5**

| **% Filler** | **Flex Abrasion (cycles)** |
|---|---|
| 15 | 100 |
| 20 | 200 |
| 25 | 400 |
| 30 | 300 |

The airbag industry typically requires a minimum value of greater than 200 for the flex abrasion test. The Examples in accordance with the present invention, particularly the Examples using 17 to 30% of the low hardness filler (D), give surprisingly good flex abrasion results especially when one considers they are free from the reinforcing fillers such as silica which the industry expect to be present in airbag coatings. Typically the industry requires a tear strength of greater than 100 N, which is demonstrated in Examples 1 to 3.

### Examples 6 and 7

Example 1(b) was repeated with the variation that minor amounts of reinforcing filler were added to the coating composition in addition to 21 % of the calcium carbonate filler.
In Example 6 1 % of a branched silicone resin was added
In Example 7 0.5% of a treated silica was added.
The coated fabrics were tested for tear strength and Edgecomb resistance and the results are shown in Table 6 below.

**Table 6**

| | **Tear Strength (N)** | **Edgecomb Resistance (N/5cm)** |
|---|---|---|
| Example 6 | 174 | 609 |
| Example 7 | 190 | 522 |

## Claims

1. An inflatable restraint device comprising a textile fabric coated with a layer of from more than 25 up to 180 g/m² of an organopolysiloxane composition comprising which is curable to an elastomer comprising:-
(A) at least one organopolysiloxane having silicon-bonded aliphatically unsaturated hydrocarbon groups, the organopolysiloxane present in greatest amount having only terminal silicon-bonded aliphatically unsaturated hydrocarbon groups per molecule and a viscosity at 25°C of at least 10 Pa.s;
(B) an organosilicon crosslinker having at least 3 silicon-bonded hydrogen atoms in an amount which is sufficient to give a molar ratio of Si-H groups in (B) to the total amount of alkenyl groups in (A) of from 1/1 to 10/1;
(C) a precious metal catalyst in an amount sufficient to promote the reaction of the aliphatically unsaturated hydrocarbon substituents of (A) with the Si-H groups of (B);
(D) 15 to 30 parts by weight of a filler per 100 parts of the weight of the total composition,
**characterised in that** the filler has a Moh hardness no greater than 4.5 and a mean particle size no greater than 3.0µm.

2. An inflatable restraint device according to claim 1 **characterised in that** component (D) comprises calcium carbonate, talc, kaolin, aluminium trihydroxide, magnesium hydroxide, gypsum, calcium sulphate, alumnite, magnesium carbonate, diatomaceous earth, barite, graphite, copper carbonate, nickel carbonate, barium carbonate and/or strontium carbonate.

3. A inflatable restraint device in accordance with claim 2 wherein component D is precipitated calcium carbonate and/or aluminium trihydroxide.

4. An inflatable restraint device according to any of Claims 1 to 3, **characterised in that** the amount of filler is 17 to 25 parts by weight filler per 100 parts of the total composition.

5. An inflatable restraint device according to any of Claims 1 to 4, **characterised in that** the said at least one organopolysiloxane (A) comprises
A (i) a first organopolysiloxane material having only terminal silicon-bonded aliphatically unsaturated hydrocarbon groups per molecule and a viscosity at 25°C of from 0.05 to 0.65 Pa.s;
A (ii) a second organopolysiloxane material having only terminal silicon-bonded aliphatically unsaturated hydrocarbon groups per molecule and a viscosity at 25°C of at least 10 Pa.s, which component A(ii) is present in a greater amount than A(i) or A(iii); and
A (iii) a third organopolysiloxane material having aliphatically unsaturated hydrocarbon substituents at terminal siloxane units and on units in the polymer chain per molecule.

6. An inflatable restraint device according to Claim 5, **characterised in that** the said at least one organopolysiloxane (A) comprises
A (i) 100 parts by weight of a first organopolysiloxane material having only terminal silicon-bonded aliphatically unsaturated hydrocarbon groups per molecule and a viscosity at 25°C of from 0.05 to 0.65 Pa.s;
A (ii) from 300 to 700 parts by weight of a second organopolysiloxane material having only terminal silicon-bonded aliphatically unsaturated hydrocarbon groups per molecule and a viscosity at 25°C of at least 10 Pa.s; and
A (iii) from 50 to 150 parts by weight of a third organopolysiloxane material having has aliphatically unsaturated hydrocarbon substituents at terminal siloxane units and on units in the polymer chain per molecule.

7. An inflatable restraint device according to any of Claims 1 to 6 **characterised in that** component B has the general formula
R³R⁴₂SiO(R⁴₂SiO)ₚ(R³HSiO)_{q}SiR⁴₂R³
or 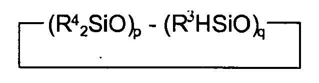 wherein R⁴ denotes an alkyl or aryl group having up to 10 carbon atoms, R³ is a group R⁴ or a hydrogen atom, p has a value of from 0 to 2q, q has a value of from 2 to 5000, and there are at least 3 silicon-bonded hydrogen atoms present per molecule.

8. An inflatable restraint device according to any of Claims 1 to 7 **characterised in that** the composition additionally contains an adhesion promoting additive (E) comprising
(i) 0.1 to 2% by weight of the whole composition of an organosilicon compound having epoxy and alkoxy functionalities,
(ii) 10 to 100 parts by weight of an organotitanium compound per 100 parts by weight of E (i) and
(iii) 50 to 100 parts by weight of an alkenyl functional silanol terminated polyorganosiloxane per 100 parts by weight of E (i).

9. An inflatable restraint device according to Claim 8 **characterised in that** the adhesion promoting additive (E) further comprises (E)(iv), a metal chelate.

10. An inflatable restraint device according to any preceding claim selected from an automotive airbag; an emergency shoot for an aeroplane and a hot air balloon.

11. A process for making an inflatable restraint device comprising coating a textile fabric with a layer of from more than 25 up to 180 g/m² of an organopolysiloxane composition, causing the layer to cure to form an elastomeric coating on the fabric, and shaping the coated fabric to form the inflatable restraint device, **characterised in that** the organopolysiloxane composition comprises:
(A) at least one organopolysiloxane having silicon-bonded aliphatically unsaturated hydrocarbon groups, the organopolysiloxane present in greatest amount having only terminal silicon-bonded aliphatically unsaturated hydrocarbon groups per molecule and a viscosity at 25°C of at least 10 Pa.s;
(B) an organosilicon crosslinker having at least 3 silicon-bonded hydrogen atoms in an amount which is sufficient to give a molar ratio of Si-H groups in (B) to the total amount of alkenyl groups in (A) of from 1/1 to 10/1;
(C) a precious metal catalyst in an amount sufficient to promote the reaction of the aliphatically unsaturated hydrocarbon substituents of (A) with the Si-H groups of (B);
(D) 15 to 30 parts by weight of a filler per 100 parts of the weight of the total composition,
**characterised in that** the filler has a Moh hardness no greater than 4.5 and a mean particle size no greater than 3.0µm.

12. A process in accordance with claim 11 **characterised in that** the inflatable restraint device is selected from an automotive airbag; an emergency shoot for an aeroplane and a hot air balloon.

13. Use of an organopolysiloxane composition comprising:-
(A) at least one organopolysiloxane having silicon-bonded aliphatically unsaturated hydrocarbon groups, the organopolysiloxane present in greatest amount having only terminal silicon-bonded aliphatically unsaturated hydrocarbon groups per molecule and a viscosity at 25°C of at least 10 Pa.s;
(B) an organosilicon crosslinker having at least 3 silicon-bonded hydrogen atoms in an amount which is sufficient to give a molar ratio of Si-H groups in (B) to the total amount of alkenyl groups in (A) of from 1/1 to 10/1;
(C) a precious metal catalyst in an amount sufficient to promote the reaction of the aliphatically unsaturated hydrocarbon substituents of (A) with the Si-H groups of (B);
(D) 15 to 30 parts by weight of a filler per 100 parts of the weight of the total composition,
to coat a textile fabric with a layer of from more than 25 up to 180 g/m² of an said organopolysiloxane composition, in the formation of an air bag, **characterised in that** the filler (D) has a Moh hardness no greater than 4.5 and a mean particle size no greater than 3.0µm.

## Patentansprüche

1. Aufblasbare Rückhaltevorrichtung, umfassend ein Textilgewebe, beschichtet mit einer Schicht von zwischen über 25 bis zu 180 g/m² einer zu einem Elastomer härtbaren Organopolysiloxan-Zusammensetzung, umfassend
(A) mindestens ein Organopolysiloxan mit Silicium-gebundenen, aliphatisch ungesättigten Kohlenwasserstoffgruppen, wobei das in der größten Menge vorhandene Organopolysiloxan nur endständige Silicium-gebundene aliphatisch ungesättigte Kohlenwasserstoffgruppen pro Molekül hat und eine Viskosität bei 25°C von mindestens 10 Pa.s;
(B) ein Organosilicium-Vernetzungsmittel mit mindestens drei Silicium-gebundenen Wasserstoffatomen in einer Menge, ausreichend um ein Molarverhältnis von Si-H-Gruppen in (B) zur Gesamtmenge Alkenylgruppen in (A) von zwischen 1:1 bis 10:1 zu ergeben;
(C) einen Edelmetall-Katalysator in einer Menge, ausreichend um die Reaktion der aliphatisch ungesättigten Kohlenwasserstoff-Substituenten aus (A) mit den Si-H-Gruppen aus (B) zu fördern;
(D) 15 bis 30 Gewichtsteile Füllmittel pro 100 Gewichtsteile der gesamten Zusammensetzung,
**dadurch gekennzeichnet, dass** das Füllmittel eine Mohs-Härte nicht größer als 4,5 und eine durchschnittliche Korngröße nicht größer als 3,0 µm hat.

2. Aufblasbare Rückhaltevorrichtung gemäß Anspruch 1, **dadurch gekennzeichnet, dass** Bestandteil (D) umfasst Calciumcarbonat, Talkum, Kaolin, Aluminiumtrihydroxyd, Magnesiumhydroxyd, Gips, Calciumsulphat, Aluminit, Magnesiumcarbonat, Kieselgur, Baryt, Graphit, Kupfercarbonat, Nickelcarbonat, Bariumcarbonat und/oder Strontiumcarbonat.

3. Aufblasbare Rückhaltevorrichtung gemäß Anspruch 2, worin Bestandteil D ausgefälltes Calciumcarbonat und/oderAluminiumtrihydroxyd ist.

4. Aufblasbare Rückhaltevorrichtung gemäß irgendeinem der Ansprüche 1 bis 3, **dadurch gekennzeichnet, dass** die Menge Füllmittel 17 bis 25 Gewichtsteile pro 100 Gewichtsteile der gesamten Zusammensetzung beträgt.

5. Aufblasbare Rückhaltevorrichtung gemäß irgendeinem der Ansprüche 1 bis 4, **dadurch gekennzeichnet, dass** das mindestens eine Organopolysiloxan (A) umfasst
A(i) ein erstes Organopolysiloxan-Material mit nur endständigen Silicium-gebundenen aliphatisch ungesättigten Kohlenwasserstoffgruppen pro Molekül und mit einer Viskosität bei 25°C von zwischen 0,05 und 0,65 Pa.s;
A(ii) ein zweites Organopolysiloxan-Material mit nur endständigen Silicium-gebundenen aliphatisch ungesättigten Kohlenwasserstoffgruppen pro Molekül und mit einer Viskosität bei 25°C von mindestens 10 Pa.s, wobei Bestandteil A(ii) in größerer Menge vorhanden ist als A(i) oder A(iii); und
A(iii) ein drittes Organopolysiloxan-Material mit aliphatisch ungesättigten Kohlenwasserstoff-Substituenten an endständigen Siloxan-Einheiten und an Einheiten in der Polymerkette pro Molekül.

6. Aufblasbare Rückhaltevorrichtung gemäß Anspruch 5, **dadurch gekennzeichnet, dass** das mindestens eine Organopolysiloxan (A) umfasst
A(i) 100 Gewichtsteile eines ersten Organopolysiloxan-Materials mit nur endständigen Silicium-gebundenen aliphatisch ungesättigten Kohlenwasserstoffgruppen pro Molekül und mit einer Viskosität bei 25°C von zwischen 0,05 und 0,65 Pa.s;
A(ii) von 300 bis 700 Gewichtsteile eines zweiten Organopolysiloxan-Materials mit nur endständigen Silicium-gebundenen aliphatisch ungesättigten Kohlenwasserstoffgruppen pro Molekül und mit einer Viskosität bei 25°C von mindestens 10 Pa.s;
A(iii) von 50 bis 150 Gewichtsteile eines dritten Organopolysiloxan-Materials mit aliphatisch ungesättigten Kohlenwasserstoff-Substituenten an endständigen Siloxan-Einheiten und an Einheiten in der Polymerkette pro Molekül.

7. Aufblasbare Rückhaltevorrichtung gemäß irgendeinem der Ansprüche 1 bis 6, **dadurch gekennzeichnet, dass** Bestandteil B die allgemeine Formel
R³R⁴₂SiO(R⁴₂SiO)ₚ(R³HSiO)_{q}SiR⁴₂R³
oder 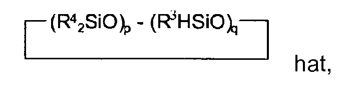 worin ist: R⁴ eine Alkyl- oder Arylgruppe mit bis zu 10 Kohlenstoffatomen, R³ ein R⁴-Gruppe oder ein Wasserstoffatom, p ein Wert von zwischen 0 bis 2q, q ein Wert von zwischen 2 bis 5000, und worin mindestens drei Silicium-gebundene Wasserstoffatome pro Molekül vorhanden sind.

8. Aufblasbare Rückhaltevorrichtung gemäß irgendeinem der Ansprüche 1 bis 7, **dadurch gekennzeichnet, dass** die Zusammensetzung zudem enthält ein adhäsionsförderndes Zusatzmittel (E), umfassend
(i) 0,1 bis 2 Gewichtsteile der gesamten Zusammensetzung einer Organosilicium-Zusammensetzung mit Epoxy- und Alkoxyfunktionen,
(ii) 10 bis 100 Gewichtsteile einer Organotitanverbindung pro 100 Gewichtsteile E(i), und
(iii) 50 bis 100 Gewichtsteile eines Alkenyl-funktionellen, Silanol-endständigen Polyorganosiloxans pro 100 Gewichtsteile E(i).

9. Aufblasbare Rückhaltevorrichtung gemäß Anspruch 8, **dadurch gekennzeichnet, dass** das adhäsionsfördernde Zusatzmittel (E) zudem E(iv), ein Metallchelat, umfasst.

10. Aufblasbare Rückhaltevorrichtung gemäß irgendeinem der vorherigen Ansprüche, ausgewählt aus einem Kraftfahrzeug-Airbag, einer Notrutsche für ein Flugzeug und einem Heißluftballon.

11. Herstellungsverfahren für eine aufblasbare Rückhaltevorrichtung, umfassend Beschichten eines Textilgewebes mit einer Schicht von zwischen über 25 bis zu 180 g/m² einer Organopolysiloxan-Zusammensetzung, wodurch die Schicht zu einer elastomerischen Beschichtung auf dem Gewebe aushärtet, und Formen des beschichteten Gewebes, so dass es die aufblasbare Rückhaltevorrichtung bildet, **dadurch gekennzeichnet, dass** die Organopolysiloxan-Zusammensetzung umfasst
(A) mindestens ein Organopolysiloxan mit Silicium-gebundenen, aliphatisch ungesättigten Kohlenwasserstoffgruppen, wobei das in der größten Menge vorhandene Organopolysiloxan nur endständige Silicium-gebundene aliphatisch ungesättigte Kohlenwasserstoffgruppen pro Molekül hat und eine Viskosität bei 25°C von mindestens 10 Pa.s;
(B) ein Organosilicium-Vernetzungsmittel mit mindestens drei Silicium-gebundenen Wasserstoffatomen in einer Menge, ausreichend um ein Molarverhältnis von Si-H-Gruppen in (B) zur Gesamtmenge Alkenylgruppen in (A) von zwischen 1:1 1 bis 10:1 1 zu ergeben;
(C) einen Edelmetall-Katalysator in einer Menge, ausreichend um die Reaktion der aliphatisch ungesättigten Kohlenwasserstoff-Substituenten aus (A) mit den Si-H-Gruppen aus (B) zu fördern;
(D) 15 bis 30 Gewichtsteile Füllmittel pro 100 Gewichtsteile der gesamten Zusammensetzung,
**dadurch gekennzeichnet, dass** das Füllmittel eine Mohs-Härte nicht größer als 4,5 und eine durchschnittliche Korngröße nicht größer als 3,0 µm hat.

12. Herstellungsverfahren gemäß Anspruch 11, **dadurch gekennzeichnet, dass** die aufblasbare Rückhaltevorrichtung ausgewählt aus einem Kraftfahrzeug-Airbag, einer Notrutsche für ein Flugzeug und einem Heißluftballon.

13. Verwendung einer Organopolysiloxan-Zusammensetzung, umfassend
(A) mindestens ein Organopolysiloxan mit Silicium-gebundenen, aliphatisch ungesättigten Kohlenwasserstoffgruppen, wobei das in der größten Menge vorhandene Organopolysiloxan nur endständige Silicium-gebundene aliphatisch ungesättigte Kohlenwasserstoffgruppen pro Molekül hat und eine Viskosität bei 25°C von mindestens 10 Pa.s;
(B) ein Organosilicium-Vernetzungsmittel mit mindestens drei Silicium-gebundenen Wasserstoffatomen in einer Menge, ausreichend um ein Molarverhältnis von Si-H-Gruppen in (B) zur Gesamtmenge Alkenylgruppen in (A) von zwischen 1:1 1 bis 10:1 zu ergeben;
(C) einen Edelmetall-Katalysator in einer Menge, ausreichend um die Reaktion der aliphatisch ungesättigten Kohlenwasserstoff-Substituenten aus (A) mit den Si-H-Gruppen aus (B) zu fördern;
(D) 15 bis 30 Gewichtsteile Füllmittel pro 100 Gewichtsteile der gesamten Zusammensetzung,
zum Beschichten eines Textilgewebes mit einer Schicht von zwischen über 25 bis zu 180 g/m² einer solchen Organopolysiloxan-Zusammensetzung bei der Herstellung eines Airbags, **dadurch gekennzeichnet, dass** das Füllmittel (D) eine Mohs-Härte nicht größer als 4,5 und eine durchschnittliche Korngröße nicht größer als 3,0 µm hat.

## Revendications

1. Dispositif de retenue gonflable comprenant une étoffe textile revêtue d'une couche de plus de 25 à 180 g/m² d'une composition d'organopolysiloxane qui est durcissable en un élastomère comprenant :
(A) au moins un organopolysiloxane ayant des groupes hydrocarbonés aliphatiquement insaturés liés au silicium, l'organopolysiloxane présent en la quantité la plus grande ayant seulement des groupes hydrocarbonés aliphatiquement insaturés liés au silicium terminaux par molécule et une viscosité à 25°C d'au moins 10 Pa.s ;
(B) un réticulant organosilicium ayant au moins 3 atomes d'hydrogène liés au silicium en une quantité qui est suffisante pour donner un rapport molaire des groupes Si-H dans (B) à la quantité totale de groupes alcényle dans (A) de 1/1 à 10/1 ;
(C) un catalyseur à métal précieux en une quantité suffisante pour promouvoir la réaction des substituants hydrocarbonés aliphatiquement insaturés de (A) avec les groupes Si-H de (B) ;
(D) 15 à 30 parties en poids d'une charge pour 100 parties du poids de la composition totale,
**caractérisé en ce que** la charge a une dureté Moh qui ne dépasse pas 4,5 et une taille de particule moyenne qui ne dépasse pas 3,0 µm.

2. Dispositif de retenue gonflable selon la revendication 1 **caractérisé en ce que** le composant (D) contient du carbonate de calcium, du talc, du kaolin, du trihydroxyde d'aluminium, de l'hydroxyde de magnésium, du gypse, du sulfate de calcium, de l'alumnite, du carbonate de magnésium, de la terre de diatomées, de la baryte, du graphite, du carbonate de cuivre, du carbonate de nickel, du carbonate de baryum et/ou du carbonate de strontium.

3. Dispositif de retenue gonflable selon la revendication 2 où le composant D est du carbonate de calcium et/ou du trihydroxyde d'aluminium précipité.

4. Dispositif de retenue gonflable selon l'une quelconque des revendications 1 à 3 **caractérisé en ce que** la quantité de charge est 17 à 25 parties en poids de charge pour 100 parties de la composition totale.

5. Dispositif de retenue gonflable selon l'une quelconque des revendications 1 à 4 **caractérisé en ce que** ledit au moins un organopolysiloxane (A) comprend
A (i) un premier produit organopolysiloxane ayant seulement des groupes hydrocarbonés aliphatiquement insaturés liés au silicium terminaux par molécule et une viscosité à 25°C de 0,05 à 0,65 Pa.s ;
A (ii) un second produit organopolysiloxane ayant seulement des groupes hydrocarbonés aliphatiquement insaturés liés au silicium terminaux par molécule et une viscosité à 25°C d'au moins 10 Pa.s, lequel composant A (ii) est présent en une plus grande quantité de A (i) ou A (iii) ; et
A (iii) un troisième produit organopolysiloxane ayant des substituants hydrocarbonés aliphatiquement insaturés sur des unités siloxane terminales et sur des unités dans la chaîne polymère par molécule.

6. Dispositif de retenue gonflable selon la revendication 5 **caractérisé en ce que** ledit au moins un organopolysiloxane (A) comprend
A (i) 100 parties en poids d'un premier produit organopolysiloxane ayant seulement des groupes hydrocarbonés aliphatiquement insaturés liés au silicium terminaux par molécule et une viscosité à 25°C de 0,05 à 0,65 Pa.s ;
A (ii) de 300 à 700 parties en poids d'un second produit organopolysiloxane ayant seulement des groupes hydrocarbonés aliphatiquement insaturés liés au silicium terminaux par molécule et une viscosité à 25°C d'au moins 10 Pa.s ; et
A (iii) de 50 à 150 parties en poids d'un troisième produit organopolysiloxane ayant des substituants hydrocarbonés aliphatiquement insaturés sur des unités siloxane terminales et sur des unités dans la chaîne polymère par molécule.

7. Dispositif de retenue gonflable selon l'une quelconque des revendications 1 à 6 **caractérisé en ce que** le composant B a la formule générale
R³R⁴₂SiO(R⁴₂SiO)ₚ(R³HSiO)_{q}SiR⁴₂R³
ou 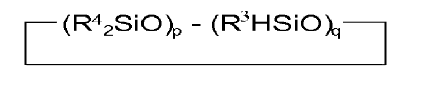 où R⁴ désigne un groupe alkyle ou aryle ayant jusqu'à 10 atomes de carbone, R³ est un groupe R⁴ ou un atome d'hydrogène, p a une valeur de 0 à 2q, q une valeur de 2 à 5 000, et il y a au moins trois atomes d'hydrogène liés au silicium présents par molécule.

8. Dispositif de retenue gonflable selon l'une quelconque des revendications 1 à 7 **caractérisé en ce que** la composition contient en outre un adhésif promoteur d'adhésion (E) comprenant
(i) 0,1 à 2 % en poids de la composition totale d'un composé d'organosilicium ayant des fonctionnalités époxy et alcoxy,
(ii) 10 à 100 parties en poids d'un composé d'organotitane pour 100 parties en poids de E (i) et
(iii) 50 à 100 parties en poids d'un polyorganosiloxane terminé par silanol alcényl-fonctionnel pour 100 parties en poids de E (i).

9. Dispositif de retenue gonflable selon la revendication 8 **caractérisé en ce que** l'additif promoteur d'adhésion (E) comprend en outre (E)(iv) un chélate métallique.

10. Dispositif de retenue gonflable selon l'une quelconque des revendications précédentes choisi parmi un sac gonflable pour véhicules automobiles ; une glissière de secours pour un aéronef et un ballon à air chaud.

11. Procédé pour produire un dispositif de retenue gonflable comprenant le revêtement d'une étoffe textile avec une couche de plus de 25 à 180 g/m² d'une composition d'organopolysiloxane, le durcissement de la couche pour former un revêtement élastomère sur l'étoffe, et la mise en forme de l'étoffe revêtue pour former le dispositif de retenue gonflable, **caractérisé en ce que** la composition d'organopolysiloxane comprend :
(A) au moins un organopolysiloxane ayant des groupes hydrocarbonés aliphatiquement insaturés liés au silicium, l'organopolysiloxane présent en la quantité la plus grande ayant seulement des groupes hydrocarbonés aliphatiquement insaturés liés au silicium terminaux par molécule et une viscosité à 25°C d'au moins 10 Pa.s ;
(B) un réticulant organosilicium ayant au moins 3 atomes d'hydrogène liés au silicium en une quantité qui est suffisante pour donner un rapport molaire des groupes Si-H dans (B) à la quantité totale de groupes alcényle dans (A) de 1/1 à 10/1 ;
(C) un catalyseur à métal précieux en une quantité suffisante pour promouvoir la réaction des substituants hydrocarbonés aliphatiquement insaturés de (A) avec les groupes Si-H de (B) ;
(D) 15 à 30 parties en poids d'une charge pour 100 parties du poids de la composition totale,
**caractérisé en ce que** la charge a une dureté Moh qui ne dépasse pas 4,5 et une taille de particule moyenne qui ne dépasse pas 3,0 µm.

12. Procédé selon la revendication 11 **caractérisé en ce que** le dispositif de retenue gonflable est choisi parmi un sac gonflable pour véhicules automobiles, une glissière de secours pour un aéronef et un ballon à air chaud.

13. Utilisation d'une composition d'organopolysiloxane comprenant :
(A) au moins un organopolysiloxane ayant des groupes hydrocarbonés aliphatiquement insaturés liés au silicium, l'organopolysiloxane présent en la quantité la plus grande ayant seulement des groupes hydrocarbonés aliphatiquement insaturés liés au silicium terminaux par molécule et une viscosité à 25°C d'au moins 10 Pa.s ;
(B) un réticulant organosilicium ayant au moins 3 atomes d'hydrogène liés au silicium en une quantité qui est suffisante pour donner un rapport molaire des groupes Si-H dans (B) à la quantité totale de groupes alcényle dans (A) de 1/1 à 10/1 ;
(C) un catalyseur à métal précieux en une quantité suffisante pour promouvoir la réaction des substituants hydrocarbonés aliphatiquement insaturés de (A) avec les groupes Si-H de (B) ;
(D) 15 à 30 parties en poids d'une charge pour 100 parties du poids de la composition totale,
pour revêtir une étoffe textile d'une couche de plus de 25 à 180 g/m² de ladite composition d'organopolysiloxane, dans la formation d'un sac gonflable, **caractérisée en ce que** la charge (D) a une dureté Moh qui ne dépasse pas 4,5 et une taille de particule moyenne qui ne dépasse pas 3,0 µm.
